# EUROPEAN PATENT SPECIFICATION

(11) **EP 0 655 716 B1**
(45) Date of publication and mention of the grant of the patent: **14.01.1998**
(21) Application number: 94308539.9
(22) Date of filing: 18.11.1994
(51) Int. Cl.: G07F 7/08, G07F 15/00, G07F 7/00

(54) **Prepayment systems**
Vorausbezahlungssysteme
Systèmes à prépaiement

(30) Priority: 30.11.1993 GB 9324566
(43) Date of publication of application: 31.05.1995
(73) Proprietor: SCHLUMBERGER INDUSTRIES LIMITED, London, WC2B 6XH (GB)
(72) Inventor: Clarke, David John, Ipswitch, Suffolk IP8 4HA (GB); Metters, Jeremy Lee, Felixstowe, Suffolk IP11 9QY (GB); Pattinson, Neville Graham, Nr Ipswich, Suffolk IP10 (GB)
(74) Representative: Stoole, Brian David

(56) References cited:
- GB-A- 2 144 566
- GB-A- 2 169 121
- GB-A- 2 191 622
- GB-A- 2 261 979

## Description

This invention relates to prepayment systems permitting access to a commodity or utility, typically electricity, gas or water, and is more particularly but not exclusively concerned with prepayment systems of the kind disclosed in our United Kingdom Patents Nos. 2 153 573 and 2 191 622.

The prepayment systems described in our United Kingdom Patent Nos 2 153 573 and 2 191 622 comprise a prepayment token in the form of key having a memory, a receptacle for the key (the receptacle typically forming part of a meter arranged to meter the commodity), and a circuit (also typically forming part of the meter) for allowing access to the commodity only when authorised by predetermined data read from the key memory. The data in the key memory is typically entered into the memory by inserting the key into a receptacle in a vending machine, normally located at the commodity supplier's premises, the machine then entering the data in return for payment, eg via a coin or bank note accepting unit forming part of the machine. The data typically includes credit data representative of the monetary amount paid, and data representative of tariff information and one or more unique identification codes.

In use, the circuit in the meter reads the data in the key memory, and permits supply of the commodity to continue until the credit represented by the credit data is exhausted, at which point it discontinues the supply, eg by means of a contactor in the case of an electricity supply or by means of a solenoid-operated valve in the case of a gas or water supply.

As already mentioned, the data in the key memory is typically entered in the memory, in return for payment, by a vending machine, which also reads from the key memory commodity consumption and other data which has been entered into the key memory by the meter. In order to render the prepayment system usable throughout an entire geographical area served by a given commodity supplier, it is desirable that there should be a large number of conveniently accessible vending machines distributed throughout the area. To this end, it is proposed that extra vending machines, over and above any located in the commodity supplier's premises, should be installed in third party premises, eg post offices, newsagents and the like. However, to avoid high overall system costs, it is desirable that the extra vending machines should be relatively simple and inexpensive, yet at the same time, they must still be able to provide the sophisticated functions required of the system. It is therefore an object of the present invention to provide a prepayment commodity supply system which meets at least some of these criteria.

According to one aspect of the present invention, there is provided a prepayment commodity supply system comprising a plurality of commodity supply control devices for controlling the supply of the commodity to consumers in response to insertion of a prepayment token having a memory containing data which includes data identifying the token and/or the consumer and credit data, each unit having a receptacle for receiving the token and a circuit coupled to the receptacle and responsive to the credit data read from the token memory to discontinue supply of the commodity when an amount of the commodity or a time period determined by said credit data has been supplied or has elapsed, a central data processor containing data relating to the tokens of the consumers in a given geographical area and arranged to supply data for and to receive data from the tokens, a plurality of slave data processors each corresponding to a respective sub-division of said area and arranged to exchange with the central processor data relating to the tokens of the consumers associated with said sub-division of said area, and a plurality of vending machines for entering data in tokens, said vending machines being distributed throughout said sub-division of said area and each communicating with the slave processor for that sub-division, each vending machine being responsive to its slave processor to receive and store data identifying selected ones of the tokens whose data is available to the slave processor, and which require some kind of special action, and being responsive to the insertion of one of said selected ones of the tokens to contact the slave processor to enable it to execute the special action in relation to said one token via the vending machine, and responsive to the insertion of other tokens to enter credit data into their memories in the normal way (ie without contacting the slave processor).

Thus in the system of the present invention, each vending machine requires only a limited amount of memory, for storing data identifying only those tokens specifically identified by the central processor and the slave processor as requiring particular kind(s) of special action (or "special attention"): for other tokens, the vending machine merely updates their credit in accordance with the amount of money paid and the relevant security algorithm or algorithms in the usual way. Typical examples of special actions can include, for example, changing a rate of debt collection (since the tokens can be used to collect debts such as previous arrears of payment and/or payment for other goods or services provided by the commodity supplier) or the issuing of a new token to replace one which has been lost or found to be faulty.

The issuing of a replacement token normally takes place in response to a consumer informing the commodity supplier that the original token has failed to work or has been lost. With the system of the present invention, the consumer can do this by telephone, whereupon the supplier gives to the consumer, over the phone, a code number, and enters the code number into the central processor, along with the identity of the consumer. The central processor then generates all the data required to create a replacement token for that consumer, and communicates this data and the code number to the slave processor(s) which serve vending machines nominated by the consumer as conveniently located for the consumer. The next time the consumer visits the location of one of these vending machines, he or she gives the code number to the operator of the machine, who inserts a blank token into the machine and enters the code number, optionally with a further "communication" command. This causes the machine to treat the blank token as if it were one of said selected ones of the tokens, so that the machine contacts the slave processor and the latter writes the necessary data to the blank token to create the replacement token.

Each vending machine preferably communicates with its slave processor via the telephone system, and each slave processor may communicate with its central processor via the telephone system.

In the limit, the slave processors may be omitted, their functions being performed by the central processor, the vending machines being arranged to communicate directly with the central processor, eg again via the telephone system.

According to another aspect of the present invention, there is provided a prepayment commodity supply system comprising a plurality of commodity supply control devices for controlling the supply of the commodity to consumers in response to insertion of a prepayment token having a memory containing data which includes data identifying the token and/or the consumer and credit data, each unit having a receptacle for receiving the token and a circuit coupled to the receptacle and responsive to the credit data read from the token memory to discontinue supply of the commodity when an amount of the commodity or a time period determined by said credit data has been supplied or has elapsed, a central data processor containing data relating to the tokens of the consumers in a given geographical area and arranged to supply data for and to receive data from the tokens, a plurality of vending machines located in said area and arranged to exchange data with the central processor, said vending machines being further arranged to periodically receive from the central processor and store data identifying selected ones of the tokens which require some kind of special action together with data defining the special action, and being responsive to the subsequent insertion of one of said selected ones of the tokens to execute the special action relating thereto, and responsive to the insertion of other tokens to enter credit data into their memories in accordance with an amount of money paid.

The invention will now be described, by way of example only, with reference to the accompanying drawings, of which:

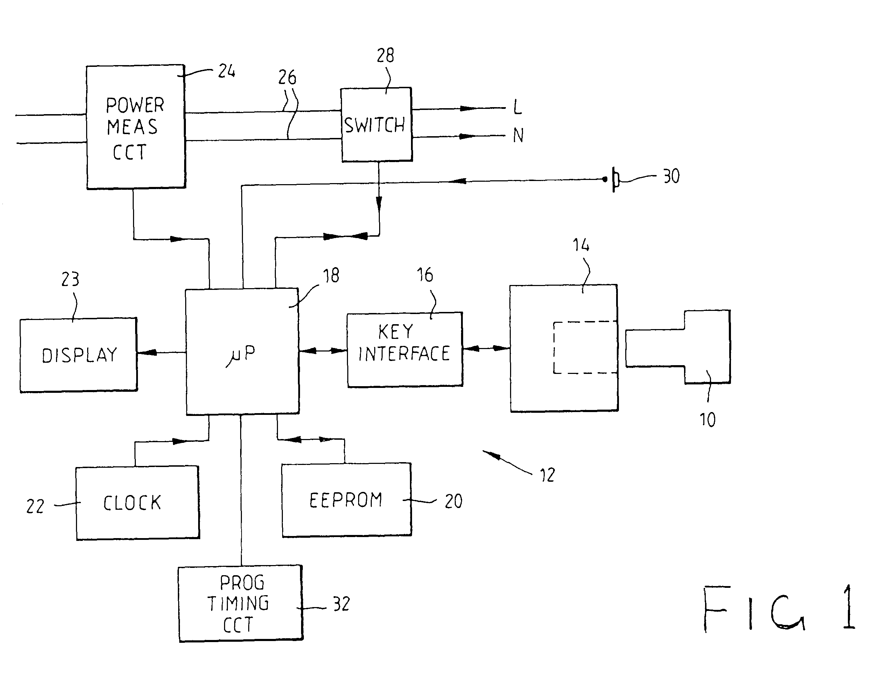

Figure 1 is a simplified block diagram of a token-operated prepayment electricity meter forming part of a prepayment electricity metering system in accordance with the present invention;
Figure 2 is a simplified block diagram of a further part of the prepayment system of which the meter of Figure 1 forms part; and
Figures 3 to 7 are software flowcharts illustrating the programs executed by the economy vending machines (ETB) shown in Figure 2.

The prepayment electricity meter shown in the drawing is intended for installation in an electricity consumer's premises, and is closely based on the prepayment meter described in our United Kingdom Patent No. 2 191 622 (which was in turn a development of the meter described in our United Kingdom patent No. 2 153 573): thus it is token-operated by an electronic token in the form of a key 10, known as a customer key, containing a non-volatile memory such as an EEPROM. The meter itself is indicated at 12, and comprises a multi-rate electricity meter having a receptacle 14 for receiving the key 10. The physical form of the key 10 and the receptacle 14 can be as described in our United Kingdom Patent No. 2 191 883.

Associated with the receptacle 14, within the meter 12, is a key interface circuit 16 coupled to a microprocessor 18. The microprocessor 18 is coupled in turn to another non-volatile memory 20 in the form of an EEPROM, to a clock 22, to an LCD display 23, to a power measuring circuit 24 connected in the consumer's electrical power distribution circuit 26 and to a switch unit or contactor 28 also connected in the distribution circuit 26.

The meter 12 operates substantially as described in our United Kingdom Patents Nos. 2 153 573 and 2 191 622. In particular, the consumer can take the key 10 to a vending machine, typically located in or near the electricity supplier's premises, and insert the key 10 into a receptacle, similar to the receptacle 14, in the machine. The consumer then inserts coins or bank notes into the machine, which, having read the key memory, responds by writing credit data representative of the amount of credit purchased into the key memory, along with tariff data representative of the current electricity supply tariffs and pass number data indicative of how many times the key has been used. The key memory typically already contains identification data uniquely identifying the key, the meter in which it is to be used and the consumer, all of which identification data was entered when the key 10 was first issued to the consumer.

Having charged the key 10 with credit, the consumer returns home and inserts the key into the receptacle 14. This causes the microprocessor 18 to read the contents of the key memory, to perform checks to see if these contents indicate a valid key as described in United Kingdom Patent No. 2 153 173, and if they do, to write them into the memory 20. The microprocessor 18 also writes the current readings of the meter 12, which are stored in the memory 20, along with the time and date to which the readings relate, into the key memory, substantially as described in United Kingdom Patent No 2 191 622.

Once the microprocessor 18 has accepted the key 10 as valid, and has written the credit data into the memory 20, the contactor 28 closes to permit the supply of electricity. Supply is allowed to continue until an amount of electricity equal in value to the monetary amount represented by the credit data received from the key 10 has been supplied, whereupon credit is exhausted, and the contactor 28 re-opens to discontinue the supply. However, the meter 12 is also provided with a push-button for enabling an emergency supply when credit is exhausted, for example under the control of a programmable timing circuit 32 as described in our United Kingdom Patent Application No. 9224195.2 (2 261 979A).

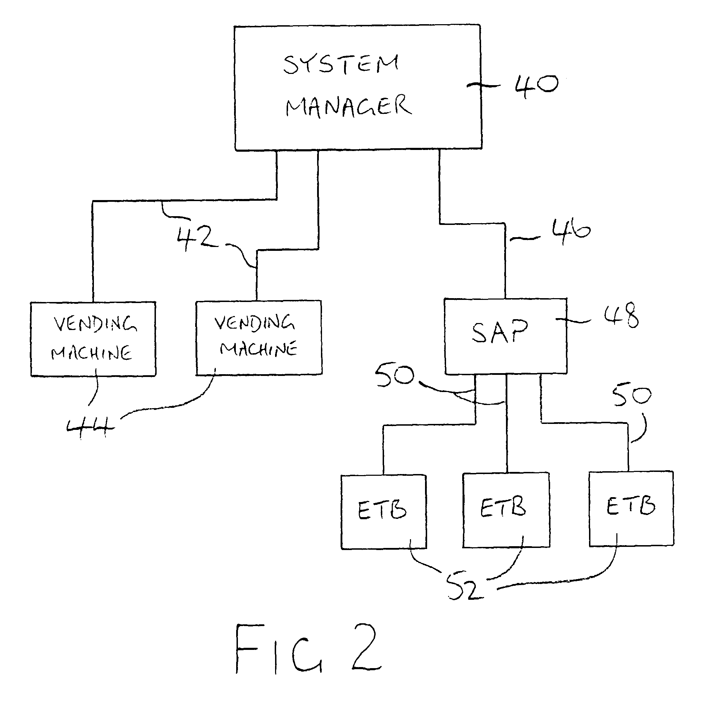

The principal difference between the system of the present invention and the system of our earlier United Kingdom Patents Nos. 2 153 573 and 2 191 622 (aside from the storage of monetary credit and tariff information in the key memory rather than an amount of energy purchased) lies in the vending part of the system, ie the part which enters data into the memories of the keys 10 in return for payment. This improved vending part of the system is shown in Figure 2, and comprises a central data processor (or system manager) 40 connected via telephone lines 42 to a plurality of vending machines 44. The processor 40 is closely based upon the existing customer support terminal already supplied by the Applicant to most of the electricity suppliers in the UK as part of its existing key-operated prepayment electricity supply system (but with certain extra facilities that will become apparent hereinafter), while the vending machines 44 can be of the coin-operated type already installed in many of the UK electricity suppliers premises (but again with certain extra facilities that will become apparent hereinafter). Additionally, the system manager 40 is coupled via a telephone line 46 to a PC-based slave processor (or "special action partner") 48, which is in turn coupled via telephone lines 50 to a plurality of much simpler vending machines (or "economy terminals") 52 suitable for installation in post offices, newsagents and the like.

The economy terminals 52 are microprocessor-based and are each provided with a receptacle for receiving the keys 10, but instead of being coin-operated, have a manual keyboard by which data representative of the monetary value of credit purchased can be entered by an authorised operator (who must first enter a personal identification number (PIN) to enable the terminal). The credit data is encrypted with the data uniquely identifying the key 10 and/or the customer and/or the customer's meter 12 using the security algorithm relevant to the manufacturer of the meter, generally as described in our United Kingdom Patent No. 2 153 473. Current tariff data can also be entered into the memory of the token 10 at the same time, if appropriate.

From time to time, it may be desired to take special action in relation to specific customers and/or their keys 10: typical examples of this are changes in debt-recovery rate (since the keys can be used to recover debts at a preselected rate at the same time as paying for the commodity), changes in the emergency credit amount or duration allowed or the issuance of a new key to replace one which has been lost or failed to operate. Heretofore, this has been done in the commodity supplier's premises in conjunction with the sytem manager 40, but has not been possible via vending machines. The present invention overcomes this drawback by permitting details of the customers and/or keys requiring special action and of the special action required to be entered into the system manager 40, typically manually, and then communicated as data via the telephone line(s) 42 to the vending machine(s) 44 covering the area where the customer in question lives and/or normally takes his or her key 10 for the entry of further credit, and via the telephone line(s) 46 to the special action partner(s) 48 covering that same area. The special action partner(s) 48 then download just that part of the data identifying the keys 10 and/or customers to those of the economy terminals 52 normally used for credit entry by those key/customers, which does not require a great deal of memory within the economy terminals. The part of the memory of the economy terminal 52 containing the identities of the keys/customers requiring special action is called "the Grey List".

When the economy terminal 52 recognises that a key 10 inserted thereinto for charging with fresh credit is one identified in the Grey List, it establishes contact with its special action partner 48 via the telephone line 50, so that the special action partner can execute the special action via the telephone line and the economy terminal. Thus the economy terminal 52 does not itself have to be sophisticated enough to store and perform the special action, since it merely has to act as a conduit for the special action.

For the issuance of replacement keys, the operator of the economy terminal 52 puts a blank key in the terminal, and enters a code number given to him or her by the consumer. This code number was communicated to the consumer when the consumer reported the loss or failure to operate of the original token to the electricity supplier. The code number, together with the data required to create a replacement key, was also communicated by the system manager 40 to the relevant special action partner 48 at about the same time that it was communicated to the consumer. Entry of the code number into the terminal 52, followed by an instruction to create a replacement key, causes the terminal to contact the special action partner 48, which then treats the blank key as if it were a Grey List key and operates via the terminal to write the necessary data to the blank key to create the replacement key.

Clearly, the vending machines 44, being fewer than the economy terminals, can be sophisticated enough to perform the special actions whose details are stored as data in them, so if a relevant key 10 is inserted in such a vending machine, it performs the special action itself.

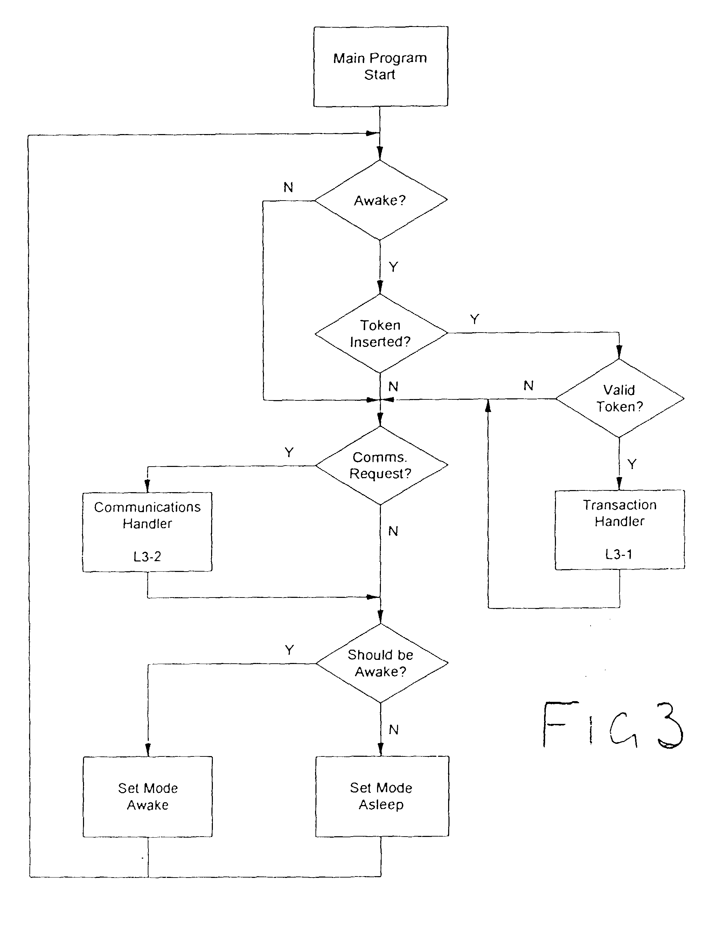

As already mentioned, the economy terminal 52 is microprocessor-based. Figures 3 to 7 are flowcharts representing the various levels of program which the microprocessor in the terminal is arranged to execute. Only those parts of the program relevant to the invention are shown in Figures 3 to 7. In the description of the flowcharts which follows, the acronym ETB means an economy terminal 52, while the acronym SAP means a special action partner 48.

### Figure 3: Main Program

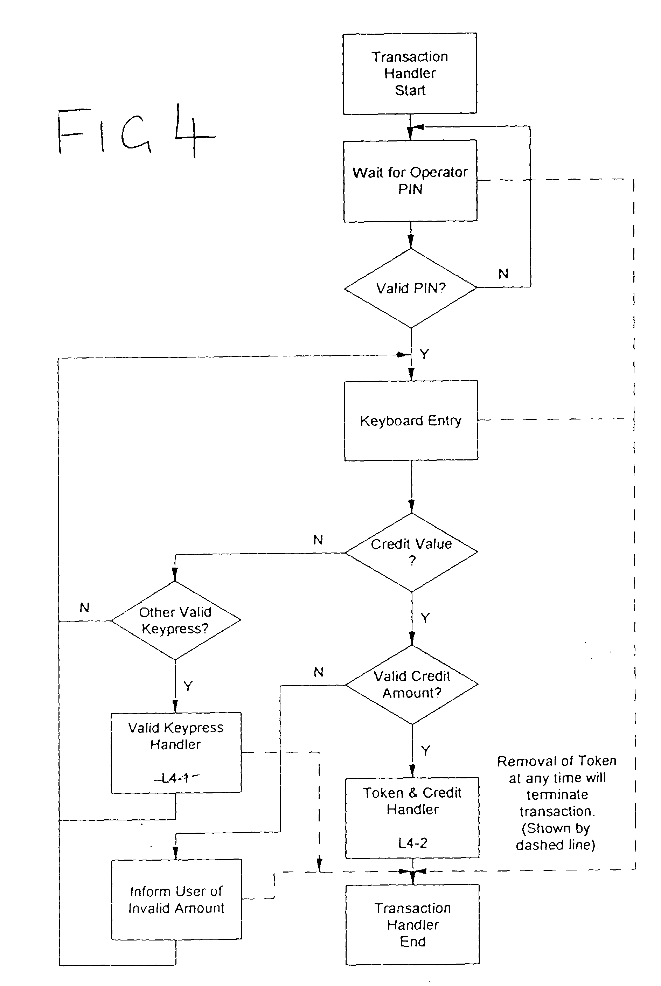

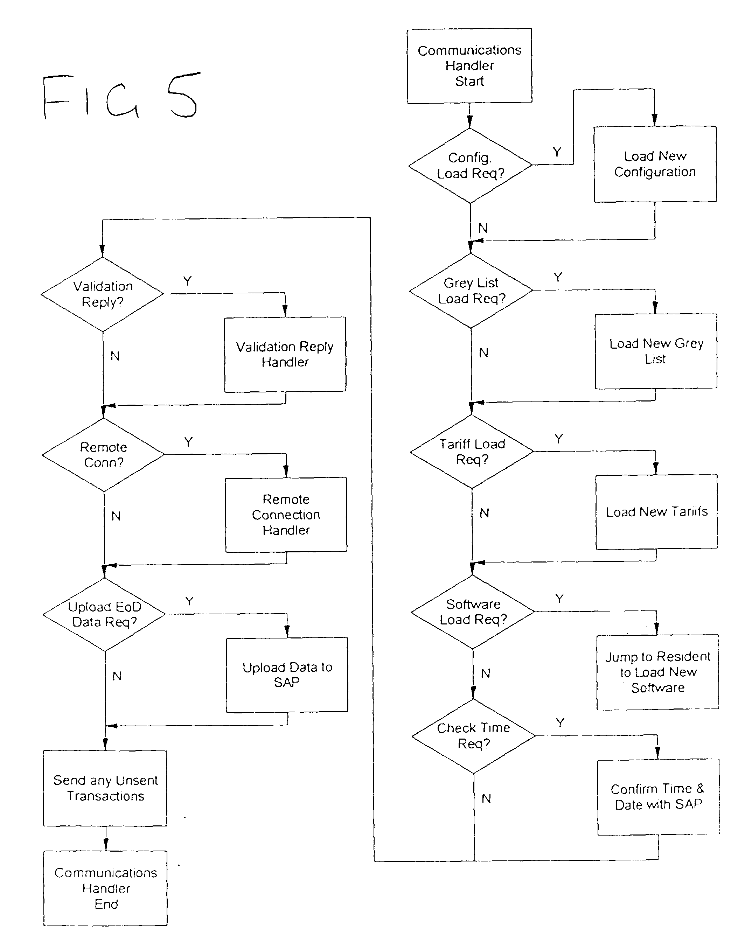

(a) **Decisions**
   (i) **Awake?**
      This decision looks at the state of the software. If the state has been set to awake, the software will perform differently to if the state has been set to asleep. When the software is asleep it will ignore any tokens inserted into the unit. This will also stop the unit accepting any key presses to initiate functions. The unit will still respond to communications requests from the SAP when it is asleep. When the software is awake, the unit's full functionality is available.
   (ii) **Token Inserted?**
      This decision looks to see if the operator has inserted a token into the unit. If a token has been inserted, the software will branch to start handling the transaction.
   (iii) **Comms. Request?**
      This decision checks to see if any communications request has been received by the ETB from the SAP. If such a request has been received, the software will branch to handle the communications with the SAP.
   (iv) **Should be Awake?**
      This decision looks at the time of day and the machine start-up and close-down times and decides if the unit should be awake or asleep. The overall state of the software will be set accordingly.
   (v) **Valid Token?**
      This decision reads the keymap from the token and decides if the token is valid. A token is valid if it is not corrupted in any way and it is either a customer token for the same electricity supplier as the ETB is configured for or a validation key.
(b) **Actions**
   (i) **Transaction Handler**
      This action contains the functionality of the ETB software that handles customer transactions. This includes reading the credit to be applied from the operator, checking if the token is in the Grey List, sending the transaction to the SAP if appropriate, updating the token and printing the receipt.
      This action is described in more detail in the flowchart of Figure 4.
   (ii) **Communications Handler**
      This action covers all the functionality whereby the SAP can connect to the ETB to collect or deliver data to the unit. This may include the delivery of configuration data, Grey Lists or tariffs, and the collection of statistical and end of day data.
      This action is described in more detail in the flowchart of Figure 5.
   (iii) **Set Mode Awake**
      This action sets the overall mode of the software to be awake (this action permits restricted hours of operation to be established).
   (iv) **Set Mode Asleep**
      This action sets the overall mode of the software to be asleep (outside the restricted hours).

### Figure 4: Transaction Handler

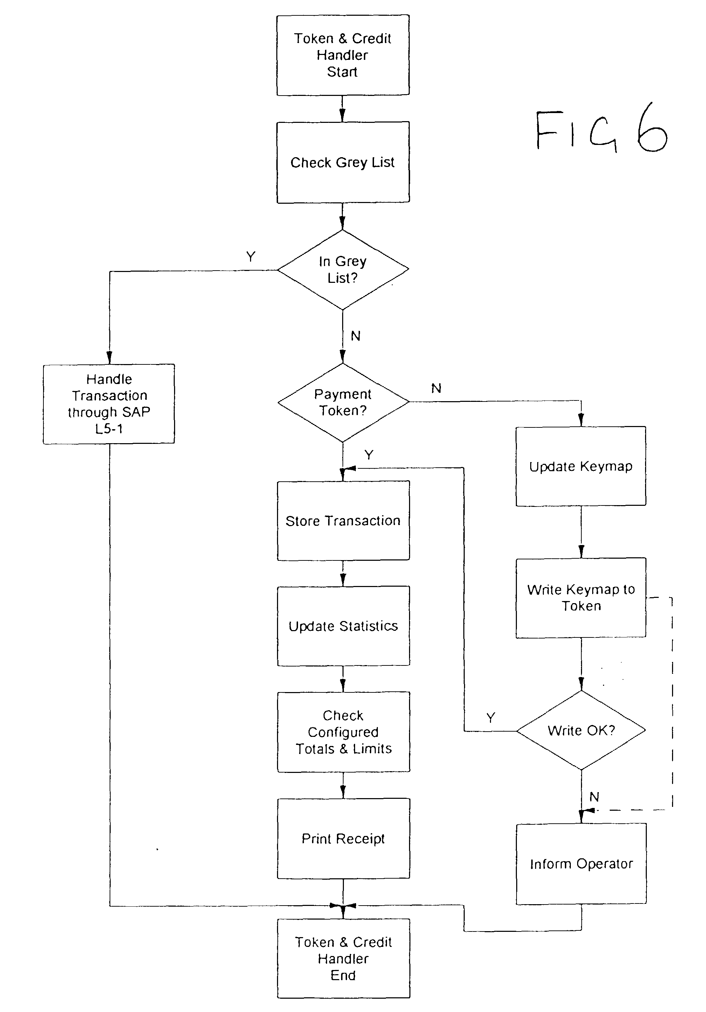

The transaction handler implements the functionality of the ETB once the unit has detected the insertion of a valid token into the unit. This includes the reading of the entry of the operator's PIN, the actioning of any other valid key presses, the reading of the amount of credit and the rest of the transaction.
(a) **Decisions**
   (i) **Valid PIN?**
      This decision checks whether the PIN entered by the operator is valid, and if so, identifies the operator. If the PIN entered is valid, the transaction will continue. If the PIN is not valid, the software will loop back and the operator will be given another chance to enter his or her PIN. There is no limit to the number of retries of the operator PIN.
   (ii) **Credit Value?**
      Once the operator has entered a valid PIN, he or she can either enter an amount of credit, or can select one of a number of special functions that the unit can perform, such a print logging data, print current transactions or manual end of day. These special functions are only available if the token that started, the transaction was a special validation token (as opposed to a customer token). This decision checks whether the keyboard entry made by the operator was a credit amount or a function selection. If the data entered was an amount of credit, the transaction will proceed. If the data entered was not a credit value, the software will check to see if the keyboard entry was a valid function code.
   (iii) **Valid Credit Amount?**
      This decision checks the amount of credit entered to see if it is valid. The amount of credit is valid if it is between the minimum and maximum transaction values the ETB is configured to handle, and the token can accept that much extra credit without becoming full. If the amount of credit is acceptable, the transaction will proceed, otherwise the software will inform the user and loop back to accept another entry attempt.
   (iv) **Other Valid Keypress**
      This decision checks a keyboard entry that is not a credit amount to see if it is a valid function selection. If the keyboard entry is a valid function, the function will be performed, otherwise the software will loop back and await further keyboard entries by the operator.
(b) **Actions**
   (i) **Wait for Operator PIN**
      This action waits for the operator to enter a PIN. Removal of the token during this action will cause the transaction to be aborted at this point.
   (ii) **Keyboard Entry**
      This action reads data entries from the keyboard. Removal of the token during this action will cause the transaction to be aborted at this point.
   (iii) **Token & Credit Handler**
      This action implements the remaining part of the transaction, ie the checking of the Grey List, the passing of the transaction to the SAP if required, the updating of the token if required, and the printing of the receipt.
      This action is described in more detail in the flowchart of Figure 6.
   (iv) **Valid Keypress Handler**
      This action implements the handling of valid function codes entered at the keyboard, such as print logging data, print tariff data and manual end of day.
   (v) **Inform User of Invalid Amount**
      This action informs the operator that they have entered an invalid credit amount and should retry. Removal of the token during this action will cause the transaction to be aborted at this point.

### Figure 5: Communications Handler

(a) **Decisions**
   (i) **Config. Load Req?**
      This decision checks to see if the data received from the SAP was a request to download a new set of configuration data to the ETB.
   (ii) **Grey List Load Req?**
      This decision checks to see if the data received from the SAP was a request to download a new Grey List to the ETB.
   (iii) **Tariff Load Req?**
      This decision checks to see if the data received from the SAP was a request to download a new set of tariff data to the ETB.
   (iv) **Software Load Req?**
      This decision checks to see if the data received from the SAP was a request to download a new set of software into the ETB.
   (v) **Check Time Req?**
      This decision checks to see if the data received from the SAP was a request to check the time and date held by the ETB.
   (vi) **Validation Reply**
      This decision checks to see if the data received from the SAP was a reply to a validation request.
   (vii) **Remote Conn?**
      This decision checks to see if the data received from the SAP was a request to form a remote connection with the SAP.
   (viii) **Upload EoD Data Req**
      This decision checks to see if the data received from the SAP was a request to upload the ETB's End of Day (EoD) data.
(b) **Actions**
   (i) **Load New Configuration**
      This action receives configuration information from the SAP and, having checked that the data is valid and complete, updates the configuration held within the ETB.
   (ii) **Load New Grey List**
      This action receives Grey List data from the SAP and either updates the Grey List with the data or replaces the Grey List with the data, depending on control information received with the new data.
   (iii) **Load New Tariffs**
      This action receives new tariff data from the SAP and, having checked that the data is valid and complete, updates the tariff data held by the ETB.
   (iv) **Jump to Resident to Load New Software**
      This action implements software loading by jumping into the resident software to routines that will load the data from the SAP.
   (v) **Confirm Time & Date with SAP**
      This action interfaces with the SAP to check the time and date that the ETB currently hold, and allows the SAP to change that time and date if required.
   (vi) **Validation Reply Handler**
      This action collects any validation replies that the unit may receive whilst the unit is operating. This condition will occur if the unit successfully connects to a SAP during validation, but before the SAP has had chance to reply, the unit was manually validated using the validation key. In this case the SAP will connect to the ETB during the unit's normal operation with a response to the validation request. As the unit has been validated with a manual validation key, the response from the SAP is no longer needed and so can safely be ignored.
   (vii) **Remote Connection Handler**
      This action handles requests from the SAP to form a remote connection with the SAP, during which the SAP will have control of the token receptacles on the ETB. This action will allow the SAP to perform such operations as remote key issue.
   (viii) **Upload Data to SAP**
      This action uploads the end of day and statistical data the ETB has collected to the SAP.
   (ix) **Send any Unsent Transactions**
      This action sends any unsent transactions to the SAP for storage and onward transmission.

### Figure 6: Token & Credit Handler

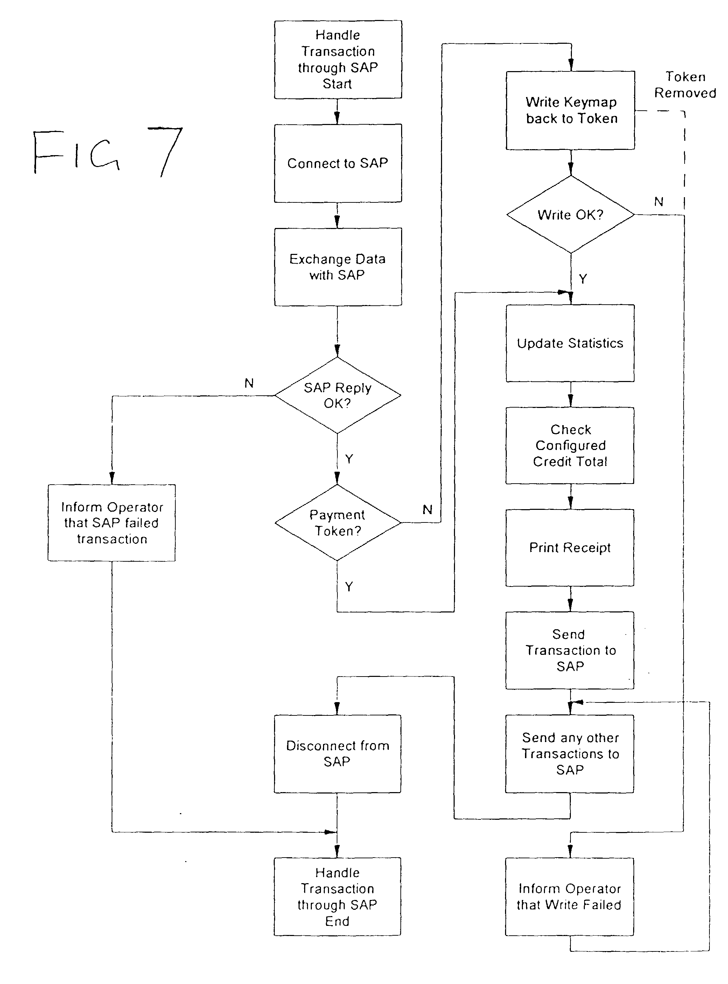

(a) **In Grey List?**
   This decision decides, based on the results of the check on the Grey List, whether the SAP should handle to transaction, or the ETB. The SAP will handle the transaction if the customer number or meter number appears in the Grey List. If the customer or meter number does not appear in the Grey List, the ETB will handle the transaction.
   (ii) **Payment Token?**
      This decision checks if the token is a simple payment token (SPT)or a normal meter charging token (an SPT is a token used in the recordal of advance lump sum payments by a credit customer) and serves merely to identify the customer account to be credited. If the token is an SPT, the ETB will not write any data to the token. Otherwise the ETB will update the keymap of a meter charging token and write the data back to the token.
   (iii) **Write OK?**
      This decision checks the outcome of writing the updated keymap back to a meter charging token. The transaction will continue if the write was successful, otherwise the operator will be informed and the transaction aborted.
(b) **Actions**
   (i) **Check Grey List**
      This action checks whether the customer number or meter number read from the token appear in the Grey List. The Grey List is a compressed form of the Special Attention List held by the SAP. If the customer number or meter number appears in the Grey List, the SAP needs to handle the processing of the transaction, due to a need to update the token in some way that the ETB cannot handle.
   (ii) **Store Transaction**
      This action stores data about the transaction for later transmission to the SAP.
   (iii) **Update Statistics**
      This action stores data about the transaction for later transmission to the SAP and also updates the statistical and cumulative data held within the ETB. The exact statistics stored depend on whether or not the token update was successful.
   (iv) **Check Configured Totals & Limits**
      This action checks that, after the addition of the data from the current transaction, the unit has not exceeded the maximum amount of credit the unit is permitted to handle in a day. If the total has been exceeded the software will enter sleep mode, so that after the end of this transaction it will perform no more transactions until after the next machine start-up time. This action will also check that the number of permitted off-line transactions has not been exceeded. If the figure has been exceeded, the ETB will connect to the SAP and download the transactions it has in memory.
   (v) **Print Receipt**
      This action prints the receipt in the appropriate format.
   (vi) **Update Keymap**
      This action updates the keymap read from the token prior to it being written back to the token. This updating of the keymap will include updates to the tariff data held on the token if necessary as well as updating the credit information held on the token.
   (vii) **Write Keymap to Token**
      This action writes the updated keymap back to the token. If the token is removed before or duing the writing of the updated keymap back to the token, the transaction will be aborted and the operator informed.
   (viii) **Inform Operator**
      This action informs the operator of the ETB's failure to update the token.
   (ix) **Handle Transaction through SAP**
      This action performs all the activities necessary if the token needs to be handled by the SAP rather than the ETB. This includes all communications with the SAP, updating the token and the ETB's statitical data, and updating the token.
      This action is decribed in more detail in the flowchart of Figure 7.

### Figure 7: Handle Transaction through SAP

(a) **Decisions**
   (i) **SAP Reply OK?**
      This decision checks the data received from the SAP in reply to the keymap and credit data sent to the SAP. The response from the SAP can be either an updated keymap or an error code. If the transaction was successful, the SAP sends an updated keymap and the ETB will continue with the transaction. If the SAP could not process the transaction for some reason it will return an error code. In this case the ETB will inform the operator of the problem and abort the transaction.
   (ii) **Write OK?**
      This decision checks the outcome of writing the updated keymap back to the token. The transaction will continue if the write was successful, otherwise the operator will be informed and the transaction aborted.
   (iii) **Payment Token?**
      This decision checks if the token is an SPT or a normal meter charging token. If the token is an SPT, the ETB will not write any data to the token. Otherwise the ETB will write the updated data back to the meter charging token.
(b) **Actions**
   (i) **Connect to SAP**
      This action will attempt to connect to the SAP. In the case of a direct connection, there can be only one SAP that the ETB can connect to. In the case of a connection via telephone, the ETB has a choice of update three SAPs, and will try each one in turn until it makes a connection.
   (ii) **Exchange Data with SAP**
      Having successfully connected to the SAP, the ETB will send the token's keymap and the credit data entered to the SAP. The ETB will then await a reply from the SAP, which will be either an updated keymap or an error code.
   (iii) **Inform Operator that SAP failed transaction**
      This action informs the operator that an error has occurred, that the SAP could not process the transaction and the ETB is aborting the transaction.
   (iv) **Write Keymap back to Token**
      This action takes the updated keymap received from the SAP and writes it back to the token. If the token is removed before or during the writing of the updated keymap back to the token, the transaction will be aborted and the operator informed.
   (v) **Update Statistics**
      This action updates the statistical and cumulative data held within the ETB. The exact statistics stored depend on whether or not the token update was successful.
   (vi) **Check Configured Credit Total**
      This action will check that, after the addition of the data from the current transaction, the unit has not exceeded the maximum amount of credit the unit is permitted to handle in a day. If the total has been exceeded the software will enter sleep mode, so that after the end of this transaction it will perform no more transactions until after the next machine start-up time.
   (vii) **Print Receipt**
      This action prints the receipt in the appropriate format.
   (viii) **Send Transaction to SAP**
      This action sends the transaction that the ETB/SAP has just handled back to the SAP for storage.
   (ix) **Send any other Transactions to SAP**
      This action sends any other unsent transactions to the SAP.
   (x) **Disconnect from SAP**
      The ETB disconnects from the SAP having concluded all communications. This concludes the handling of the transaction.
   (xi) **Inform Operator that Write Failed**
      This action informs the operator that an error has occurred writing the keymap back to the token and the ETB is aborting the transaction.

Many modifications can be made to the described embodiment of the invention.

For example, the key 10 need not have the physical form of a key, but can instead be constituted by a so-called "smart card" (which can either be electronically identical to the key 10 or contain a microprocessor as well as a memory) or by a magnetic card. Also, although all the elements of the drawing (except the key 10) are described as being contained within a single housing, they can if desired be contained in two separate housings, one containing the power measuring circuit 24 and the contactor 28, and the other containing the other elements (except they key 10).

Additionally, although the invention has been described in relation to an electricity metering system, it is equally applicable to other commodity metering systems, for example gas or water metering systems. In the case of gas and water metering systems, the power measuring circuit 24 and the contactor 28 are simply replaced by a flow measuring device and a solenoid-operated valve respectively, which are connected in flow series in a pipe through which the gas or water flows, and the electrical/electronic circuitry of the systems can if necessary be battery-powered.

Finally, and particularly where the commodity is water, the commodity supply can be pre-paid for on a timed basis, rather than on a metered basis (ie a given amount of credit permits supply for say a week or a month). In this case, the metering function can still be retained, with the clock 22 and the microprocessor 18 serving additionally to provide the necessary timing function, and with the meter readings still being entered in the key 10 along with the time and date information. However, in the limit, the metering function can be omitted altogether, eg by omitting the power measuring circuit 24 or the flow measuring device.

## Claims

1. A prepayment commodity supply system comprising a plurality of commodity supply control devices (28) for controlling the supply of the commodity to consumers in response to insertion of a prepayment token (10) having a memory containing data which includes data identifying the token and/or the consumer and credit data, each unit having a receptacle (14) for receiving the token and a circuit (16, 18) coupled to the receptacle and responsive to the credit data read from the token memory to discontinue supply of the commodity when an amount of the commodity or a time period determined by said credit data has been supplied or has elapsed, a central data processor (40) containing data relating to the tokens of the consumers in a given geographical area and arranged to supply data for and to receive data from the tokens, a plurality of slave data processors (48) each corresponding to a respective sub-division of said area and arranged to exchange with the central processor data relating to the tokens of the consumers associated with said subdivision of said area, and a plurality of vending machines (52) for entering data in tokens, said vending machines being distributed throughout said sub-divisions of said area and each communicating with the slave processor for that sub-division, each vending machine being responsive to its slave processor to receive and store data identifying selected ones of the tokens whose data is available to the slave processor, and which tokens require some kind of special action, and being responsive to the insertion of one of said selected ones of the tokens to contact the slave processor to enable it to execute the special action in relation to said one token via the vending machine, and responsive to the insertion of other tokens to enter credit data into their memories without contacting the slave processor.

2. A prepayment system as claimed in claim 1, wherein in order to create a replacement token to replace a token (10) which has been lost or mislaid by a consumer, a code number authorising the replacement is communicated to the consumer and also entered into the central processor (40) for communication to the slave processor (48) serving at least one vending machine (52) nominated or normally used by the consumer, and the code number is subsequently entered into the vending machine along with a blank token, whereupon the vending machine contacts the slave processor and the latter writes the necessary data to the blank token to create the replacement token.

3. A prepayment system as claimed in claim 1 or claim 2, wherein each vending machine communicates with its slave processor via the telephone system (50).

4. A prepayment system as claimed in any preceding claim, wherein each slave processor communicates with the central processor via the telephone system (46).

5. A prepayment system as claimed in claim 1 or claim 2, wherein the slave processors are omitted, their functions being performed by the central processor (40), the vending machines (44) being arranged to communicate directly with the central processor.

6. A prepayment system as claimed in claim 5, wherein the vending machines (44) communicate with the central processor via the telephone system (42).

7. A prepayment commodity supply system comprising a plurality of commodity supply control devices (28) for controlling the supply of the commodity to consumers in response to insertion of a prepayment token (10) having a memory containing data which includes data identifying the token and/or the consumer and credit data, each unit having a receptacle (14) for receiving the token and a circuit (16, 18) coupled to the receptacle and responsive to the credit data read from the token memory to discontinue supply of the commodity when an amount of the commodity or a time period determined by said credit data has been supplied or has elapsed, a central data processor (40) containing data relating to the tokens of the consumers in a given geographical area and arranged to supply data for and to receive data from the tokens, a plurality of vending machines (44) located in said area and arranged to exchange data with the central processor, said vending machines being further arranged to periodically receive from the central processor and store data identifying selected ones of the tokens which require some kind of special action together with data defining the special action, and being responsive to the subsequent insertion of one of said selected ones of the tokens to execute the special action relating thereto, and responsive to the insertion of other tokens to enter credit data into their memories in accordance with an amount of money paid.

8. A prepayment system as claimed in claim 7, wherein the vending machines communicate with the central processor via the telephone system (42).

## Patentansprüche

1. Vorausbezahlungssystem zur Versorgung mit Grundmitteln, das mehrere Grundmittelversorgungssteuereinrichtungen (28) aufweist, um die Versorgung von Verbrauchern mit dem Grundmittel in Reaktion auf das Einführen einer Vorausbezahlungsmarke (10) zu steuern, die einen Speicher mit Daten aufweist, die Daten zur Identifizierung der Marke und/oder des Verbrauchers sowie Kreditdaten umfassen, wobei jede Einheit einen Behälter (14) zur Aufnahme der Marke sowie eine Schaltung (16, 18) aufweist, die mit dem Behälter gekoppelt ist und auf die von dem Markenspeicher ausgelesenen Kreditdaten reagiert, um die Versorgung mit dem Grundmittel zu unterbrechen, wenn eine von den Kreditdaten bestimmte Menge des Grundmittels geliefert oder ein von den Kreditdaten bestimmter Zeitraum abgelaufen ist, sowie einen zentralen Datenprozessor (40), der Daten bezüglich der Marken der Verbraucher in einem gegebenen geographischen Gebiet enthält und derart ausgebildet ist, daß er Daten an die Marken liefert und davon erhält, mehrere Slave-Datenprozessoren (48), die jeweils einer Unterabteilung dieses Gebiets entsprechen und derart angeordnet sind, daß sie mit dem Zentralprozessor Daten bezüglich der Marken der Verbraucher austauschen, die der Unterabteilung des Gebiets zugeordnet sind, und mehrere Verkaufsautomaten (52) zum Eingeben von Daten in Marken, wobei die Verkaufsmaschinen über alle Unterabteilungen des Gebietes verteilt sind und jeweils mit dem Slave-Prozessor für diese Unterabteilung in Verbindung stehen, wobei jeder Verkaufsautomat auf seinen Slave-Prozessor reagiert, um Daten zu empfangen und zu speichern, die ausgewählte Marken identifizieren, deren Daten für den Slave-Prozessor verfügbar sind und die eine Art einer speziellen Aktion erfordern, und auf das Einführen einer der ausgewählten Marken reagieren, um den Slave-Prozessor zu kontaktieren, damit er die spezielle Aktion bezüglich einer Marke über den Verkaufsautomaten ausführen kann, sowie auf das Einführen anderer Marken reagieren, um Kreditdaten in ihre Speicher einzugeben, ohne den Slave-Prozessor zu kontaktieren.

2. Vorausbezahlungssystem nach Anspruch 1, bei welchem zum Schaffen einer Ersatzmarke zum Ersatz einer Marke (10), die von einem Verbraucher verloren oder verlegt wurde, dem Verbraucher eine Codenummer mitgeteilt wird, die den Ersatz zuläßt, und auch in den Zentralprozessor (40) zur Kommunikation mit dem Slave-Prozessor (48) eingegeben wird, der wenigstens einen Verkaufsautomaten (52) bedient, der von dem Verbraucher benannt oder normalerweise benutzt wird, und die Codenummer daraufhin zusammen mit einer leeren Marke in den Verkaufsautomaten eingegeben wird, woraufhin der Verkaufsautomat den Slave-Prozessor kontaktiert und dieser die notwendigen Daten in die leere Marke einschreibt, um die Ersatzmarke zu erzeugen.

3. Vorausbezahlungssystem nach Anspruch 1 oder Anspruch 2, bei welchem jeder Verkaufsautomat über das Fernsprechsystem (50) mit seinem Slave-Prozessor in Verbindung steht.

4. Vorausbezahlungssystem nach einem der vorhergehenden Ansprüche, bei welchem jeder Slave-Prozessor über das Fernsprechsystem (46) mit dem Zentralprozessor in Verbindung steht.

5. Vorausbezahlungssystem nach Anspruch 1 oder Anspruch 2, bei welchem die Slave-Prozessoren fortgelassen sind, wobei ihre Funktionen von dem Zentralprozessor (40) durchgeführt werden und die Verkaufsautomaten (44) so ausgebildet sind, daß sie direkt mit dem Zentralprozessor in Verbindung stehen.

6. Vorausbezahlungssystem nach Anspruch 5, bei welchem die Verkaufsautomaten (44) über das Fernsprechsystem (42) mit dem Zentralprozessor in Verbindung stehen.

## Revendications

1. Système de fourniture de matière consommable à prépaiement comprenant une pluralité de dispositifs (28) de commande de fourniture de matière consommable pour commander la fourniture de la matière consommable à des consommateurs en réponse à l'insertion d'un jeton (10) de prépaiement ayant une mémoire contenant des données qui comprennent des données identifiant le jeton et/ou le consommateur et des données de crédit, chaque unité ayant un réceptacle (14) destiné à recevoir le jeton et un circuit (16, 18) relié au réceptacle et sensible aux données de crédit lues depuis la mémoire du jeton afin d'interrompre la fourniture de la matière consommable lorsqu'une certaine quantité de la matière consommable ou lorsqu'un temps déterminé par lesdites données de crédit a été fournie ou s'est écoulé, une unité centrale de traitement de données contenant des données concernant les jetons des consommateurs d'une zone géographique donnée et conçue pour fournir des données destinées aux jetons et recevoir des données de ceux-ci, une pluralité d'unités de traitement de données esclaves (48) correspondant chacune à une subdivision respective de ladite zone et conçues pour échanger avec l'unité centrale de traitement des données concernant les jetons des consommateurs associés à ladite subdivision de ladite zone, et une pluralité de distributeurs automatiques (52) destinés à charger des données dans les jetons, lesdits distributeurs automatiques étant répartis sur toutes lesdites subdivisions de ladite zone et communiquant chacun avec l'unité de traitement esclave pour cette subdivision, chaque distributeur automatique étant sensible à son unité de traitement esclave pour recevoir et stocker des données identifiant certains, sélectionnés, des jetons dont les données sont disponibles pour l'unité de traitement esclave, et ces jetons nécessitant un certain type d'action particulière et étant sensibles à l'insertion de l'un sélectionné desdits jetons pour contacter l'unité de traitement esclave afin de lui permettre d'exécuter l'action spéciale en relation avec ledit jeton par l'intermédiaire du distributeur automatique, et étant sensibles à l'insertion d'autres jetons pour charger des données de crédit dans leurs mémoires sans contacter l'unité de traitement esclave.

2. Système de prépaiement selon la revendication 1, dans lequel, pour créer un jeton de remplacement destiné à remplacer un jeton (10) ayant été perdu ou mal introduit par un consommateur, un numéro de code autorisant le remplacement est communiqué au consommateur et est également chargé dans l'unité centrale de traitement (40) pour être communiqué à l'unité de traitement esclave (48) desservant au moins un distributeur automatique (52) nommé ou normalement utilisé par le consommateur, et le numéro de code est ensuite chargé dans le distributeur automatique en association avec un jeton vierge, le distributeur automatique contactant alors l'unité de traitement esclave et cette dernière écrivant les données nécessaires dans le jeton vierge afin de créer le jeton de remplacement.

3. Système de prépaiement selon la revendication 1 ou 2, dans lequel chaque distributeur automatique communique avec son unité de traitement esclave par l'intermédiaire du système téléphonique (50).

4. Système de prépaiement selon l'une quelconque des revendications précédentes, dans lequel chaque unité de traitement esclave communique avec l'unité centrale de traitement par l'intermédiaire du système téléphonique (46).

5. Système de prépaiement selon la revendication 1 ou 2, dans lequel les unités de traitement esclaves sont omises, leurs fonctions étant remplies par l'unité centrale de traitement (40), les distributeurs automatiques (44) étant conçus pour communiquer directement avec l'unité centrale de traitement.

6. Système de prépaiement selon la revendication 5, dans lequel les distributeurs automatiques (44) communiquent avec l'unité centrale de traitement par l'intermédiaire du système téléphonique (42).

7. Système de fourniture de matières consommables à prépaiement comprenant une pluralité de dispositifs (28) de commande de fourniture de matière consommable pour commander la fourniture de la matière consommable à des consommateurs en réponse à l'insertion d'un jeton (10) de prépaiement ayant une mémoire contenant des données qui comprennent des données identifiant le jeton et/ou le consommateur et des données de crédit, chaque unité ayant un réceptacle (14) destiné à recevoir le jeton et un circuit (16, 18) relié au réceptacle et sensible aux données de crédit lues depuis la mémoire du jeton pour interrompre la fourniture de la matière consommable lorsqu'une certaine quantité de la matière consommable ou lorsqu'un temps déterminé par lesdites données de crédit a été fournie ou s'est écoulé, une unité centrale de traitement (40) de données contenant des données concernant les jetons des consommateurs d'une zone géographique donnée et conçue pour fournir des données destinées aux jetons et recevoir des données de ceux-ci, une pluralité de distributeurs automatiques (44) situés dans ladite zone et conçus pour échanger des données avec l'unité centrale de traitement, lesdits distributeurs étant en outre conçus pour recevoir périodiquement de l'unité centrale de traitement et stocker des données identifiant certains des jetons qui nécessitent un certain type d'action particulière en association avec des données définissant l'action particulière, étant sensibles à l'insertion ultérieure de l'un desdits jetons sélectionnés pour exécuter l'action particulière qui leur est liée, et étant sensibles à l'insertion d'autres jetons pour charger des données de crédit dans leurs mémoires en fonction d'un montant payé.

8. Système de prépaiement suivant la revendication 7, dans lequel les distributeurs automatiques communiquent avec l'unité centrale de traitement par l'intermédiaire du système téléphonique (42).
